# EUROPÄISCHE PATENTSCHRIFT

(11) **EP 4 221 931 B1**
(45) Veröffentlichungstag und Bekanntmachung des Hinweises auf die Patenterteilung: **19.11.2025**
(21) Anmeldenummer: 21777409.0
(22) Anmeldetag: 15.09.2021
(51) Int. Cl.: B23K 37/04, B23Q 3/10, B25B 5/00, B25B 5/10, B25B 11/02

(54) **WINKELELEMENT FÜR EIN SCHWEISS- UND SPANNTISCHSYSTEM UND BAUKASTENSYSTEM ZUR HERSTELLUNG VERSCHIEDENER VARIANTEN EINES WINKELELEMENTS**
BRACKET ELEMENT FOR A WELDING AND CLAMPING-TABLE SYSTEM, AND MODULAR SYSTEM FOR PRODUCING DIFFERENT VARIANTS OF A BRACKET ELEMENT
ÉLÉMENT DE SUPPORT POUR UN SYSTÈME DE SOUDAGE ET DE TABLE DE SERRAGE, ET SYSTÈME MODULAIRE POUR PRODUIRE DIFFÉRENTES VARIANTES D'UN ÉLÉMENT DE SUPPORT

(30) Priorität: 29.09.2020 DE 102020005959
(43) Veröffentlichungstag der Anmeldung: 09.08.2023
(73) Patentinhaber: Bernd Siegmund GmbH, 86507 Oberottmarshausen (DE)
(72) Erfinder: SIEGMUND, Bernd, 86845 Großaitingen (DE)
(74) Vertreter: Seifert, Thomas
(86) Internationale Anmeldenummer: PCT/EP2021/025347
(87) Internationale Veröffentlichungsnummer: WO 2022/069071

(56) Entgegenhaltungen:
- EP-A1- 1 522 380
- EP-A2- 2 845 695
- DE-A1- 10 326 702
- DE-U1- 202011 003 777

## Beschreibung

Die Erfindung bezieht sich auf ein Winkelelement für ein Schweiß- und Spanntischsystem und auf ein Baukastensystem zur Herstellung verschiedener Varianten eines Winkelelements, siehe Ansprüche 1 und 3 .

Winkelelemente finden in Verbindung mit Schweiß- und Spanntischsystemen Verwendung, mit denen sich Gegenstände aufspannen und verschweißen oder auf andere Weise bearbeiten lassen. Daneben gibt es jedoch auch eine Vielzahl anderer Einsatzmöglichkeiten für Schweiß- und Spanntischsysteme , beispielsweise zum Vermessen von Vorrichtungen oder dergleichen. Schweißtische sind etwa aus der EP 0 541 904 A1 oder der DE 91 09 540 U1 bekannt.

Schweißtische besitzen in ihrer Oberfläche und gegebenenfalls auch in seitlichen Wangen der Tischplatte eine Vielzahl von meist runden Systembohrungen, die in einem gleichmäßigen Rastermaß angeordnet sind und mit unterschiedlichen Durchmessern ausgestattet sein können. Daneben besitzen die Schweißtische ein vielfältiges Zubehör, mit dem das Aufspannen von Gegenständen ermöglicht wird. So sind im wesentlichen winkelförmige Stützen vorgesehen, die ebenfalls runde Systembohrungen oder aber auch langlochförmige Öffnungen aufweisen. Diese Stützen können untereinander oder mit dem Tisch durch Spannmittel, etwa Spannbolzen verbunden werden, die aus einer Gewindeschraube mit zugehöriger Mutter bestehen können. Daneben finden auch Spannbolzen Verwendung, die von einer Seite aus in die Systembohrungen des Tisches eingeführt werden und sich innerhalb der Systembohrung oder an der Unterseite der Tischplatte abstützen. Neben den bereits genannten Druckschriften sind solche Spannbolzen auch aus der DE 199 17 209 A1, DE 202 19 317 U1 bekannt.

Daneben werden im Zusammenhang mit Schweißtischen als Spannmittel Schraubzwingen verwendet, die ebenfalls zum Verspannen von Gegenständen dienen. Solche Schraubzwingen finden sich neben den bereits genannten Druckschriften auch in der US 4 867 427, DE 100 11 490 A1, DE 200 23 552 U1, DE 202 04 107 U1, DE 202 12 731 U1, DE 202 19 317 U1, DE 10 2009 022 013 A1 oder in Form von Schnellspannzwingen in der DE 90 15 218 U1. Außerdem sind verschiedene Ausführungen von Schnellspannern bekannt, beispielsweise Vertikalspanner, Horizontalspanner oder Schubstangenspanner, die Fußplatten mit einem Bohrraster zur Befestigung auf einer Platte aufweisen.

Als weiteres Zubehör sind noch verschiedene Anschläge mit runden und/oder langlochförmigen Öffnungen und Prismen bekannt.

Die EP 2 845 695 A2 beschreibt ein Winkelelement für einen Spann- bzw. Schweißtisch mit zumindest zwei geraden Seitenwänden, die in einem vorbestimmten Winkel zueinander angeordnet sind, einer Vielzahl Bohrungen in zumindest einem Wandelement, wobei das Wandelement an den Seitenwänden angeordnet ist und die Bohrungen Durchgangsbohrungen sind. Daneben weist das zumindest eine Wandelement eine im Wesentlichen kreisbogenförmige Nut auf, die als Durchgangsbohrung ausgeführt ist. Die Abmessungen und Ausgestaltungen des Winkelelements mit den Bohrungen sind fest vorgegeben, so dass eine Vielzahl verschiedener Ausgestaltungen des Winkelelements notwendig sind.

Aus der DE 103 26 702 A1 ist ein Aufbauelement zum Aufspannen eines Werkstücks auf einem Spanntisch mittels eines Spannwerkzeuges bekannt, das einen Grundkörper und eine an dem Spanntisch angreifende Befestigungsschraube sowie einer Abstützfläche für das Spannwerkzeug aufweist. Der Grundkörper weist zwei im Wesentlichen parallel zum Spanntisch erstreckende Brückenelemente, ein Distanzelement und zwei Verbindungsschrauben auf. Die Befestigungsschraube erstreckt sich im Wesentlichen über die Höhe des Aufbauelementes durchgehend und ist in den beiden Brückenelementen drehbar geführt. Dieses Aufbauelement besitzt einen komplexen Aufbau und kann wegen der wegen der erforderlichen Schraubverbindung mit dem Spanntisch nicht in Verbindung mit den eingangs beschriebenen Schweiß- und Spanntischsystemen mit Systembohrungen verwendet werden.

Die EP 1 522 380 A1 (offenbarend den Oberbegriff der Ansprüche 1 und 3) beschreibt ein Winkelprofilelement als Ausgangselement zum Aufbau von Vorrichtungen zur Aufnahme von Werkstücken mit zwei in einem rechten Winkel zueinander angeordneten, in einer Längsrichtung verlaufenden Schenkeln. Aus dem Winkelprofilelement in der Grundform kann durch weiteres Bearbeiten ein anderes Winkelprofilelement erhalten werden. Die verschiedenen Winkelprofilelemente können zu einem Aufbau mit einer Kniehebelzwinge zusammengefügt werden, indem die Winkelprofilelemente aufeinander aufliegen, sich aneinander abstützen und mit Schrauben entlang aller drei Raumrichtungen verbunden sind.

Der Erfindung liegt das Problem zugrunde, ein Winkelelement für ein Schweiß- und Spanntischsystem sowie ein Baukastensystem zur Herstellung verschiedener Varianten eines Winkelelements anzugeben, die besonders flexibel einsetzbar sind.

Gelöst wird diese Aufgabe mit den Merkmalen der unabhängigen Ansprüche und 3 . Vorteilhafte Ausgestaltungen der Erfindung ergeben sich aus den abhängigen Ansprüchen.

Das erfindungsgemäße Winkelelement für ein Schweiß- und Spanntischsystem besteht aus einem L-förmigen Profil, an dessen einem Ende eine Grundplatte und an dessen anderem Ende entweder eine Grundplatte oder einer Spannplatte lösbar befestigt sind, wobei die Grundplatte mit wenigstens einer Systembohrung des Schweiß- und Spanntischsystems versehen ist und die Spannplatte mit mehreren Gewindebohrungen versehen ist, um verschiedene Bohrbilder von Schnellspannern zu erfassen. Über die Systembohrung der Grundplatte kann das Winkelelement beispielsweise mittels eines Spannbolzens mit einem Schweißtisch verbunden werden, wobei eine Drehbeweglichkeit besteht. Befindet sich auch am anderen Ende des Winkelelements eine Grundplatte mit Systembohrung, dann können dort weitere Zubehörteile des Schweiß- und Spanntischsystems Verwendung finden, beispielsweise Schraubzwingen mit einem runden Fuß, oder Winkelstützen mittels eines weiteren Spannbolzens befestigt werden. Befindet sich am anderen Ende des Winkelelements eine Spannplatte, dann kann dort ein Schnellspanner befestigt werden, beispielsweise verschraubt.

Eine ganz besondere Flexibilität der Einsatzmöglichkeiten ergibt sich mit dem erfindungsgemäßen Baukastensystem zur Herstellung verschiedener Varianten eines Winkelelements. In dem Baukastensystem sind
- eine Mehrzahl verschiedener L-förmiger Profile in unterschiedlichen Stabilitätsausführungen,
- eine Mehrzahl verschiedener Grundplatten mit unterschiedlichen Systembohrungen für unterschiedliche Schweiß- und Spanntischsysteme und/oder mit unterschiedlichen Abmessungen entsprechend den Stabilitätsausführungen der L-förmigen Profile, sowie
- eine Mehrzahl verschiedener Spannplatten mit unterschiedlichen Abmessungen entsprechend den Stabilitätsausführungen der L-förmigen Profile vorgesehen.

Die unterschiedlichen Stabilitätsausführungen der L-förmigen Profile können beispielsweise aus einer leichten Ausführung, einer Standardausführung und einer schweren Ausführung bestehen, die sich in den Abmessungen der Länge und Dicke der Schenkel unterscheiden.

Die verschiedenen Varianten der Grundplatten können zum einen mit unterschiedlichen Systembohrungen für unterschiedliche Schweiß- und Spanntischsysteme versehen sein und/oder zum anderen unterschiedliche Abmessungen entsprechend den Stabilitätsausführungen der L-förmigen Profile aufweisen. Es wäre zum Beispiel auch möglich an den beiden Enden Grundplatten mit Systembohrungen unterschiedlicher Schweiß- und Spanntischsysteme zu befestigen und so eine weitere Erhöhung der Flexibilität bei der Verwendung von Zubehör zu erreichen.

Die verschiedenen Varianten der Spannplatten können unterschiedliche Abmessungen entsprechend den Stabilitätsausführungen der L-förmigen Profile aufweisen.

Die verschiedenen L-förmigen Profile können in standardisierter Länge und individuell kürzbar vorgesehen sein. Besonders vorteilhaft ist dies, wenn die L-förmigen Profile als stranggezogene Aluprofile hergestellt werden, die als Meterware verkauft und vom Kunden individuell abgelängt werden können. Aus technischen Gründen kann es dabei erforderlich sein, Maximal- und Minimallängen vorzugeben.

Wenn die Außenseiten der Schenkel der verschiedenen L-förmigen Profile mit T-Nuten und/oder mit Gewindebohrungen versehen sind, können darin Schablonen zum Einlegen und Positionieren von Werkstücken verschraubt werden. Fixiert werden die Werkstücke dann mittels Schnellspannern in verschiedenen Ausführungen, die auf der Spannplatte oder seitlich in den T-Nuten bzw. Gewindebohrungen befestigt werden. Alternativ ist auch eine Fixierung der Werkstücke mit Spannelementen aus dem Zubehör eines Schweiß- und Spanntischsystems möglich bei Befestigung einer zweiten Grundplatte an dem L-förmigen Profil.

Eine weitere Erhöhung der Variabilität wird erreicht, wenn die verschiedenen Grundplatten und/oder die verschiedenen Spannplatten Befestigungsbohrungen, die sich mit entsprechenden Bohrungen in den stirnseitigen Enden eines oder mehrerer der verschiedenen L-förmigen Profile decken, aufweisen und mittels gewindefurchenden Schrauben an den L-förmigen Profilen befestigbar sind. Mit Befestigungsbohrungen für mehrere der verschiedenen L-förmigen Profile ist es möglich, dass eine Grundplatte an L-förmigen Profilen unterschiedlicher Stabilitätsausführungen befestigt werden kann.

Die bereits erwähnt Drehbeweglichkeit des Winkelelements um die Systembohrung in der Grundplatte kann mittels eines zweiten Spannbolzens festgelegt werden, wenn die verschiedenen Grundplatten wenigstens eine kreisbogenförmige Ausnehmung für unterschiedliche Schweiß- und Spanntischsysteme aufweisen.

In der Zeichnung ist die Erfindung anhand von Ausführungsbeispielen näher erläutert. Es zeigen:
Fig. 1a, 1b, 2a, 2b, 3a, 3b, 4a, 4b, 5a, 5b, 6a, 6b verschiedene Varianten von L-förmigen Profilen,
Fig. 7a, 7b, 8a, 8b, 9a, 9b, 10a, 10b, 11a, 11b, 12a, 12b, 13a, 13b verschiedene Varianten von Grundplatten,
Fig. 14a, 14b, 15a, 15b, 16a, 16b verschiedene Varianten von Spannplatten,
Fig. 17, 18, 19 verschiedene Kombinationsmöglichkeiten von L-förmigen Profilen und Grundplatten,
Fig. 20a, 20b, 20c ein Ausführungsbeispiel eines Winkelelements mit einem Schnellspanner und
Fig. 21a, 21b ein Ausführungsbeispiel eines Winkelelements mit einer Schraubzwinge.

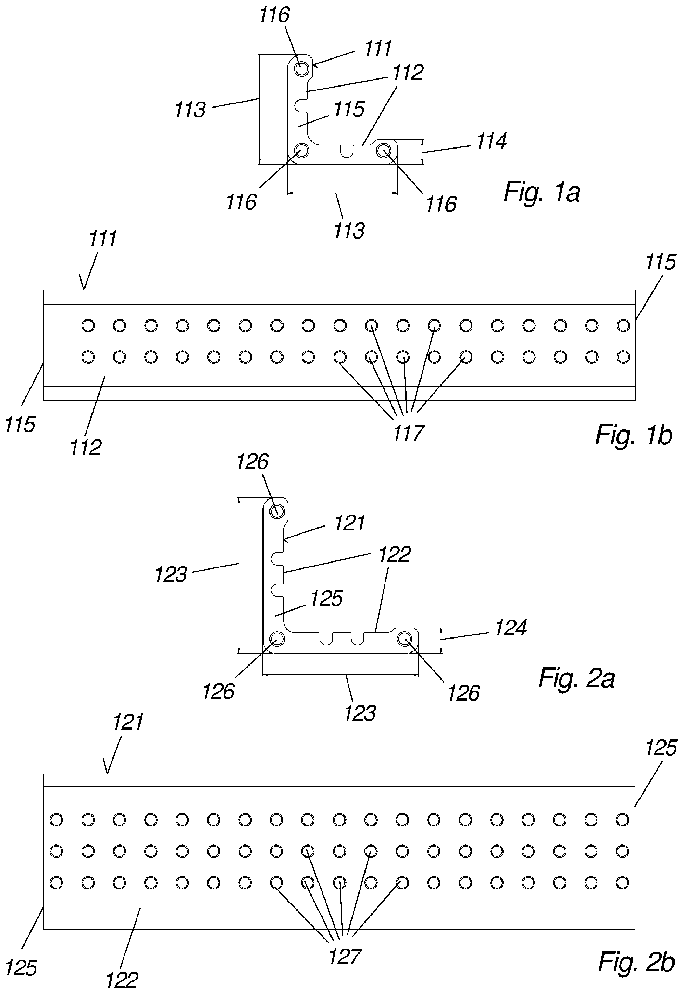

In den Fig. 1a, 1b ist ein L-förmiges Profil 111 in einer leichten Ausführung dargestellt. Die Schenkel 112 besitzen beispielsweise eine Länge 113 von 70 mm und eine Dicke 114 von 16 mm. In den stirnseitigen Enden 115 sind Bohrungen 116 vorgesehen. Die Außenseiten der Schenkel 112 sind mit Gewindebohrungen 117 versehen.

In den Fig. 2a, 2b ist ein L-förmiges Profil 121 in einer Standardausführung dargestellt. Die Schenkel 122 besitzen beispielsweise eine Länge 123 von 99 mm und eine Dicke 124 von 16 mm. In den stirnseitigen Enden 125 sind Bohrungen 126 vorgesehen. Die Außenseiten der Schenkel 122 sind mit Gewindebohrungen 127 versehen.

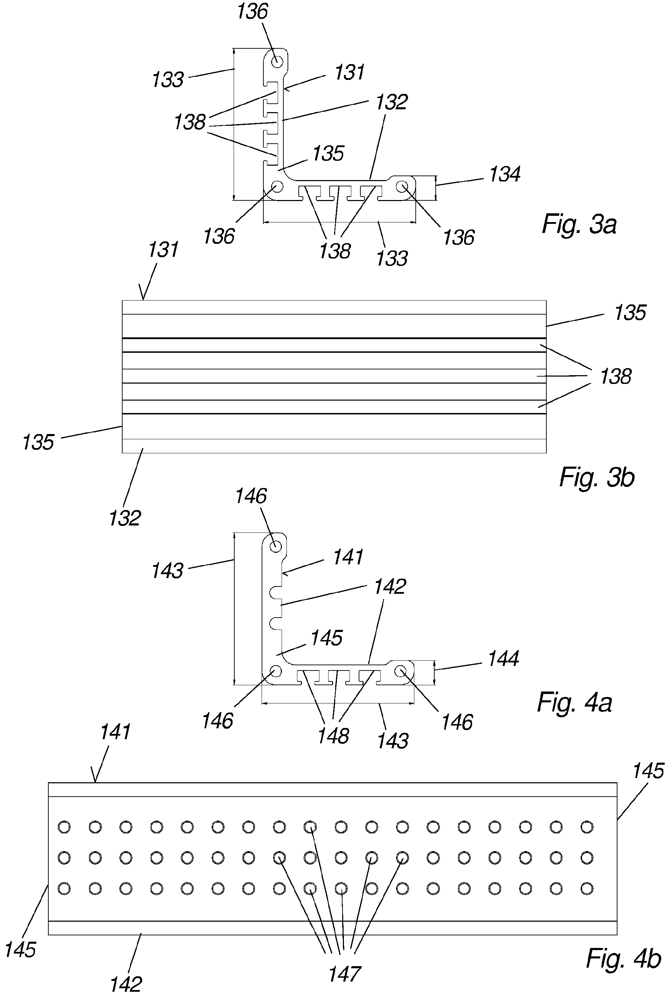

In den Fig. 3a, 3b ist ein anderes L-förmiges Profil 131 in einer Standardausführung dargestellt. Die Schenkel 132 besitzen beispielsweise eine Länge 133 von 99 mm und eine Dicke 134 von 16 mm. In den stirnseitigen Enden 135 sind Bohrungen 136 vorgesehen. Die Außenseiten der Schenkel 132 sind mit T-Nuten 138 versehen.

In den Fig. 4a, 4b ist ein weiteres L-förmiges Profil 141 in einer Standardausführung dargestellt. Die Schenkel 142 besitzen beispielsweise eine Länge 143 von 99 mm und eine Dicke 144 von 16 mm. In den stirnseitigen Enden 145 sind Bohrungen 146 vorgesehen. Die Außenseite eines Schenkels 142 ist mit Gewindebohrungen 147 und die Außenseite des anderen Schenkels 142 ist mit T-Nuten 148 versehen.

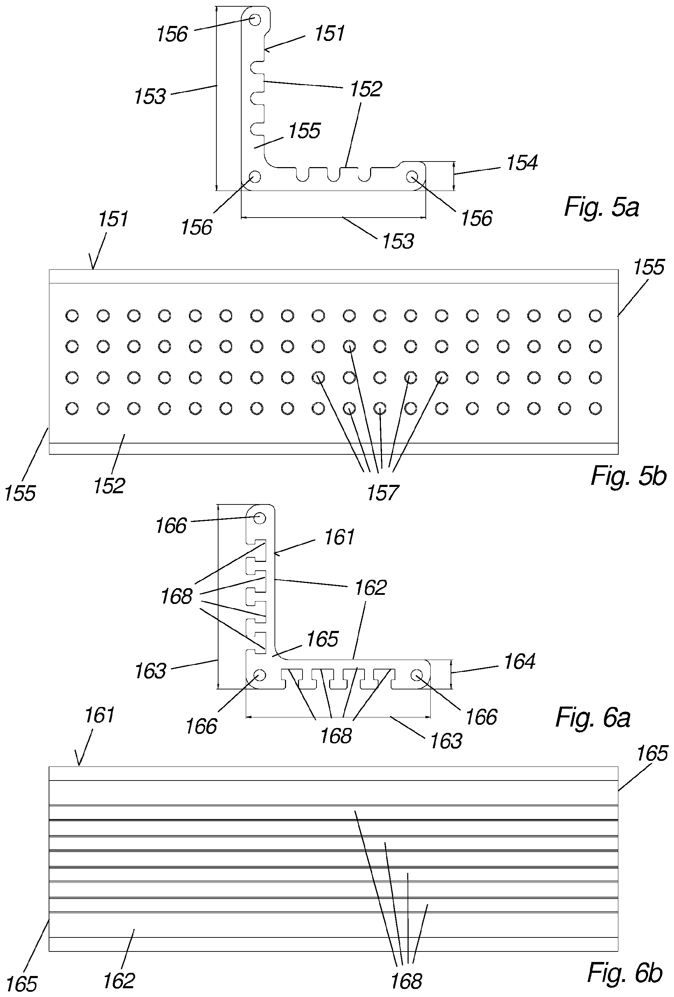

In den Fig. 5a, 5b ist ein L-förmiges Profil 151 in einer schweren Ausführung dargestellt. Die Schenkel 152 besitzen beispielsweise eine Länge 153 von 120 mm und eine Dicke 154 von 19 mm. In den stirnseitigen Enden 155 sind Bohrungen 156 vorgesehen. Die Außenseiten der Schenkel 152 sind mit Gewindebohrungen 157 versehen.

In den Fig. 6a, 6b ist ein anderes L-förmiges Profil 161 in einer schweren Ausführung dargestellt. Die Schenkel 162 besitzen beispielsweise eine Länge 163 von 120 mm und eine Dicke 164 von 19 mm. In den stirnseitigen Enden 165 sind Bohrungen 166 vorgesehen. Die Außenseiten der Schenkel 162 sind mit T-Nuten 168 versehen.

Im Fall von stranggezogenen Aluprofilen als L-förmiges Profil 111, 121, 131, 141, 151, 161 erstrecken sich die Bohrungen 116, 126, 136, 146, 156, 166 durch das gesamte L-förmige Profil 111, 121, 131, 141, 151, 161. Damit ist es möglich, dass L-förmige Profil 111, 121, 131, 141, 151, 161 auf eine passende Länge zu kürzen und dennoch die Bohrungen 116, 126, 136, 146, 156, 166 zu verwenden.

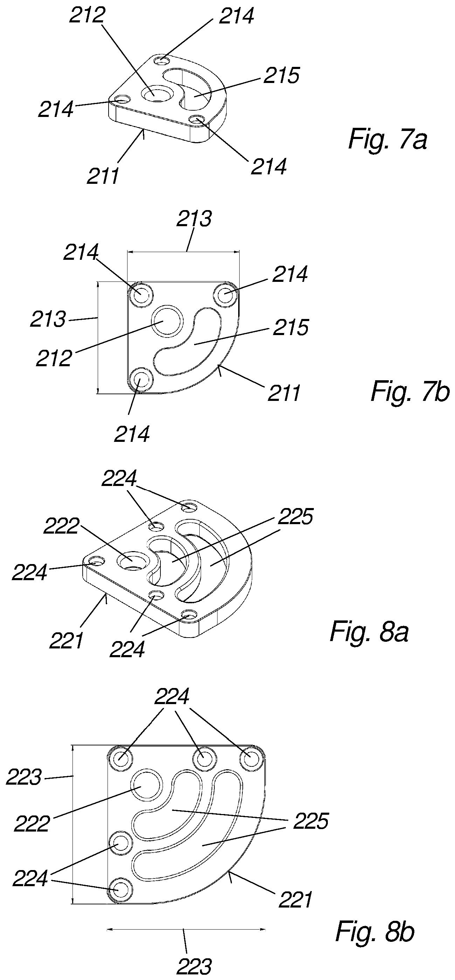

In den Fig. 7a, 7b ist eine Grundplatte 211 mit einer Systembohrung 212 mit einem Durchmesser von beispielsweise 16 mm dargestellt. Die Abmessungen 213 der Grundplatte 211 betragen beispielsweise 69,4 mm. Die Grundplatte 211 weist Befestigungsbohrungen 214 auf, die sich mit den entsprechenden Bohrungen 116 in den stirnseitigen Enden 115 des L-förmigen Profils 111 decken. Mittels gewindefurchender Schrauben kann die Grundplatte 211 damit an dem L-förmigen Profil 111 befestigt werden. Darüber hinaus ist die Grundplatte 211 mit einer kreisbogenförmigen Ausnehmung 215 mit einem Radius von beispielsweise 25 mm um die Systembohrung 212 versehen.

In den Fig. 8a, 8b ist eine andere Grundplatte 221 mit einer Systembohrung 222 mit einem Durchmesser von beispielsweise 16 mm dargestellt. Die Abmessungen 223 der Grundplatte 221 betragen beispielsweise 98,4 mm. Die Grundplatte 221 weist Befestigungsbohrungen 224 auf, die sich mit den entsprechenden Bohrungen 116 oder 126, 136, 146 in den stirnseitigen Enden 115 oder 125, 135, 145 des L-förmigen Profils 111 oder 121, 131, 141 decken. Mittels gewindefurchender Schrauben kann die Grundplatte 221 damit an dem L-förmigen Profil 111 oder 121, 131, 141 befestigt werden. Darüber hinaus ist die Grundplatte 221 mit zwei kreisbogenförmigen Ausnehmungen 225 mit einem Radius von beispielsweise 25 mm und 50 mm um die Systembohrung 222 versehen.

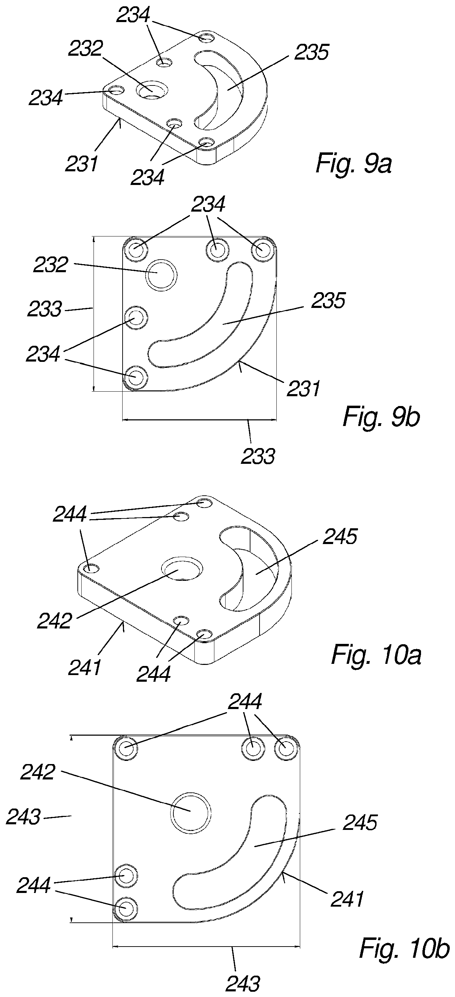

In den Fig. 9a, 9b ist eine weitere Grundplatte 231 mit einer Systembohrung 232 mit einem Durchmesser von beispielsweise 16 mm dargestellt. Die Abmessungen 233 der Grundplatte 231 betragen beispielsweise 98,4 mm. Die Grundplatte 231 weist Befestigungsbohrungen 234 auf, die sich mit den entsprechenden Bohrungen 116 oder 126, 136, 146 in den stirnseitigen Enden 115 oder 125, 135, 145 des L-förmigen Profils 111 oder 121, 131, 141 decken. Mittels gewindefurchender Schrauben kann die Grundplatte 231 damit an dem L-förmigen Profil 111 oder 121, 131, 141 befestigt werden. Darüber hinaus ist die Grundplatte 231 mit einer kreisbogenförmigen Ausnehmung 235 mit einem Radius von beispielsweise 50 mm um die Systembohrung 232 versehen.

In den Fig. 10a, 10b ist eine Grundplatte 241 mit einer Systembohrung 242 mit einem Durchmesser von beispielsweise 22 mm dargestellt. Die Abmessungen 243 der Grundplatte 241 betragen beispielsweise 119,4 mm. Die Grundplatte 241 weist Befestigungsbohrungen 244 auf, die sich mit den entsprechenden Bohrungen 126, 136, 146 oder 156, 166 in den stirnseitigen Enden 125, 135, 145 oder 155, 165 des L-förmigen Profils 121 131, 141 oder 151, 161 decken. Mittels gewindefurchender Schrauben kann die Grundplatte 241 damit an dem L-förmigen Profil 121, 131, 141 oder 151, 161 befestigt werden. Darüber hinaus ist die Grundplatte 241 mit einer kreisbogenförmigen Ausnehmung 245 mit einem Radius von beispielsweise 50 mm um die Systembohrung 242 versehen.

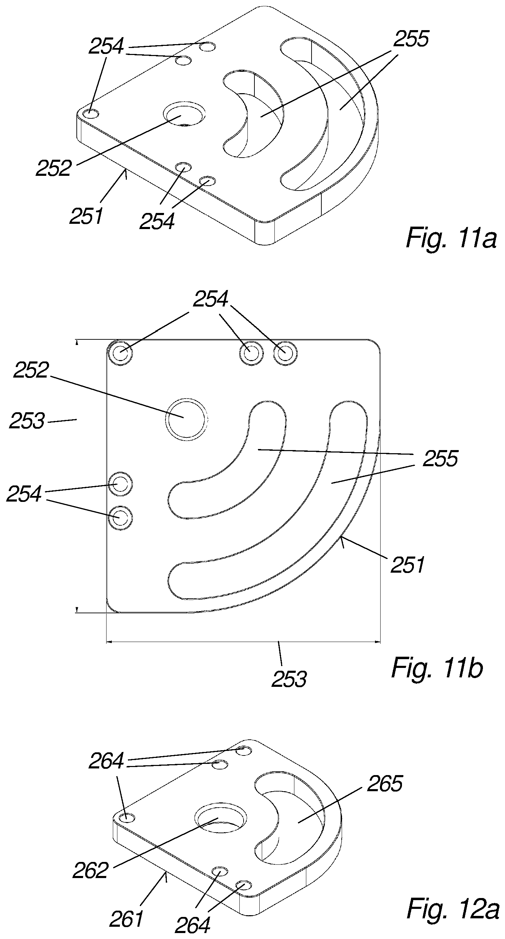

In den Fig. 11a, 11b ist eine andere Grundplatte 251 mit einer Systembohrung 252 mit einem Durchmesser von beispielsweise 22 mm dargestellt. Die Abmessungen 253 der Grundplatte 251 betragen beispielsweise 169,4 mm. Die Grundplatte 251 weist Befestigungsbohrungen 254 auf, die sich mit den entsprechenden Bohrungen 126, 136, 146 oder 156, 166 in den stirnseitigen Enden 125, 135, 145 oder 155, 165 des L-förmigen Profils 121 131, 141 oder 151, 161 decken. Mittels gewindefurchender Schrauben kann die Grundplatte 251 damit an dem L-förmigen Profil 121, 131, 141 oder 151, 161 befestigt werden. Darüber hinaus ist die Grundplatte 251 mit zwei kreisbogenförmigen Ausnehmungen 255 mit einem Radius von beispielsweise 50 mm und 100 mm um die Systembohrung 252 versehen.

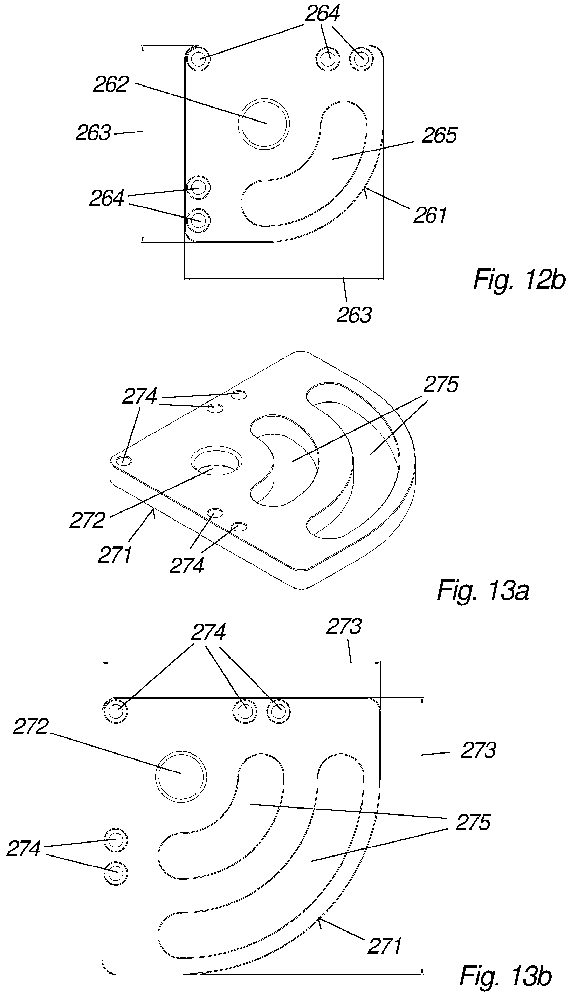

In den Fig. 12a, 12b ist eine Grundplatte 261 mit einer Systembohrung 262 mit einem Durchmesser von beispielsweise 28 mm dargestellt. Die Abmessungen 263 der Grundplatte 261 betragen beispielsweise 124,4 mm. Die Grundplatte 261 weist Befestigungsbohrungen 264 auf, die sich mit den entsprechenden Bohrungen 126, 136, 146 oder 156, 166 in den stirnseitigen Enden 125, 135, 145 oder 155, 165 des L-förmigen Profils 121 131, 141 oder 151, 161 decken. Mittels gewindefurchender Schrauben kann die Grundplatte 261 damit an dem L-förmigen Profil 121, 131, 141 oder 151, 161 befestigt werden. Darüber hinaus ist die Grundplatte 261 mit einer kreisbogenförmigen Ausnehmung 265 mit einem Radius von beispielsweise 50 mm um die Systembohrung 262 versehen.

In den Fig. 13a, 13b ist eine andere Grundplatte 271 mit einer Systembohrung 272 mit einem Durchmesser von beispielsweise 28 mm dargestellt. Die Abmessungen 273 der Grundplatte 271 betragen beispielsweise 174,4 mm. Die Grundplatte 271 weist Befestigungsbohrungen 274 auf, die sich mit den entsprechenden Bohrungen 126, 136, 146 oder 156, 166 in den stirnseitigen Enden 125, 135, 145 oder 155, 165 des L-förmigen Profils 121 131, 141 oder 151, 161 decken. Mittels gewindefurchender Schrauben kann die Grundplatte 271 damit an dem L-förmigen Profil 121, 131, 141 oder 151, 161 befestigt werden. Darüber hinaus ist die Grundplatte 271 mit zwei kreisbogenförmigen Ausnehmungen 275 mit einem Radius von beispielsweise 50 mm und 100 mm um die Systembohrung 272 versehen.

Mit den entsprechenden Spannbolzen des jeweiligen Schweiß- und Spanntischsystems lassen sich die Grundplatten 211, 221, 231, 241, 251, 261, 271 auf einem Schweißtisch befestigen, wobei eine Drehbeweglichkeit gegeben ist.

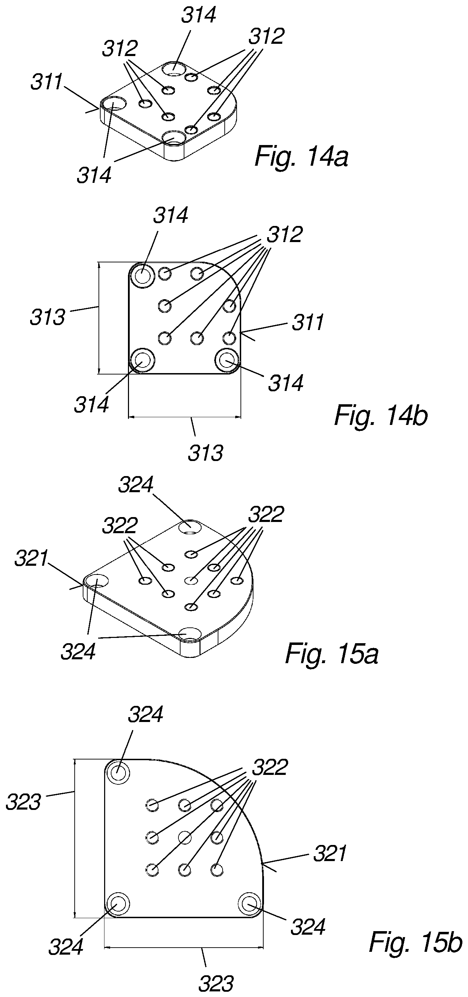

In den Fig. 14a, 14b ist eine Spannplatte 311 mit Gewindebohrungen 312 dargestellt. Die Gewindebohrungen 312 sind so angeordnet, dass sie verschiedene Bohrbilder von Schnellspannern erfassen. Die Abmessungen 313 der Spannplatte 311 betragen beispielsweise 69,4 mm. Die Spannplatte 311 weist Befestigungsbohrungen 314 auf, die sich mit den entsprechenden Bohrungen 116 in den stirnseitigen Enden 115 des L-förmigen Profils 111 decken. Mittels gewindefurchender Schrauben kann die Spannplatte 311 damit an dem L-förmigen Profil 111 befestigt werden.

In den Fig. 15a, 15b ist eine andere Spannplatte 321 mit Gewindebohrungen 322 dargestellt. Die Gewindebohrungen 322 sind so angeordnet, dass sie verschiedene Bohrbilder von Schnellspannern erfassen. Die Abmessungen 323 der Spannplatte 321 betragen beispielsweise 98,4 mm. Die Spannplatte 321 weist Befestigungsbohrungen 324 auf, die sich mit den entsprechenden Bohrungen 126, 136, 146 in den stirnseitigen Enden 125, 135, 145 des L-förmigen Profils 121, 131, 141 decken. Mittels gewindefurchender Schrauben kann die Spannplatte 321 damit an dem L-förmigen Profil 121, 131, 141 befestigt werden.

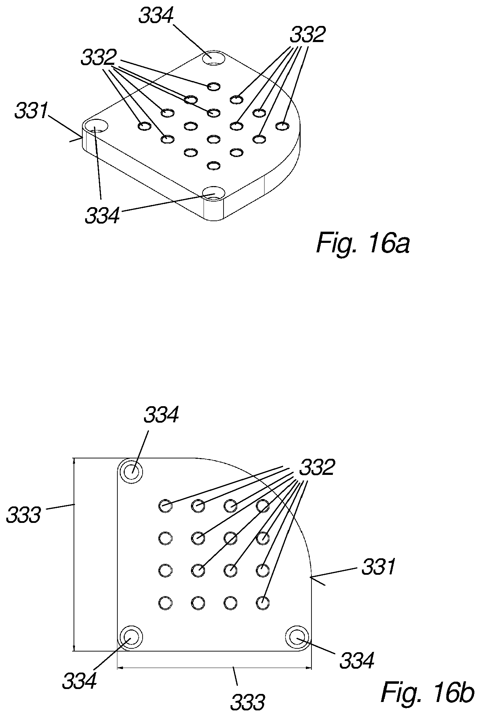

In den Fig. 16a, 16b ist eine weitere Spannplatte 331 mit Gewindebohrungen 332 dargestellt. Die Gewindebohrungen 332 sind so angeordnet, dass sie verschiedene Bohrbilder von Schnellspannern erfassen. Die Abmessungen 333 der Spannplatte 331 betragen beispielsweise 119,4 mm. Die Spannplatte 331 weist Befestigungsbohrungen 334 auf, die sich mit den entsprechenden Bohrungen 156, 166 in den stirnseitigen Enden 155, 165 des L-förmigen Profils 151, 161 decken. Mittels gewindefurchender Schrauben kann die Spannplatte 331 damit an dem L-förmigen Profil 151, 161 befestigt werden.

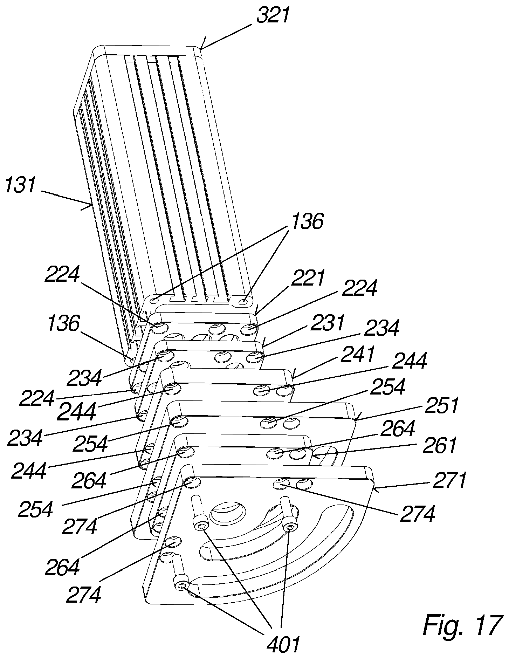

Die Kombinationsmöglichkeiten der verschiedenen Varianten der L-förmigen Profile 111, 121, 131, 141, 151, 161 und der Grundplatten 211, 221, 231, 241, 251, 261, 271 werden anhand der Fig. 17, 18 und 19 näher erläutert.

In der Fig. 17 ist das L-förmige Profil 131 der Fig. 3a, 3b gezeigt. Wie sich aus der Darstellung ergibt, kann jede der Grundplatten 221, 231, 241, 251, 261, 271 mit dem L-förmigen Profil 131 lösbar befestigt werden, indem gewindefurchende Schrauben 401 die jeweiligen Befestigungsbohrungen 224, 234, 244, 254, 264, 274 durchgreifen und in die Bohrungen 136 eingreifen. Es versteht sich, dass entsprechendes auch für die andern L-förmigen Profile 121, 141 gilt. Am anderen Ende des L-förmigen Profils 131 ist die Spannplatte 321 lösbar befestigt, indem gewindefurchende Schrauben die Befestigungsbohrungen 324 durchgreifen und in die Bohrungen 136 eingreifen.

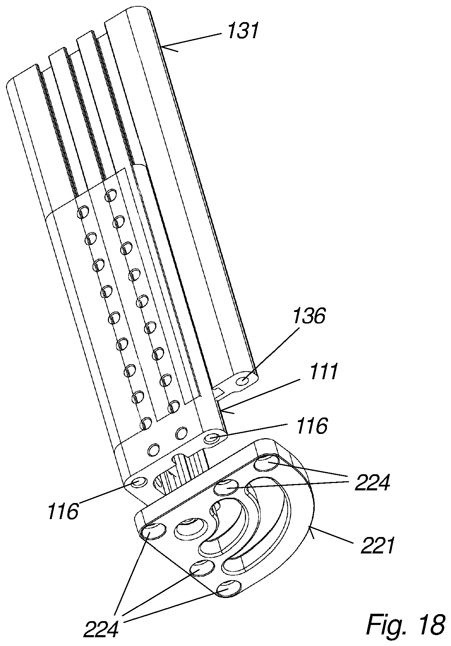

In der Fig. 18 ist die Grundplatte 221 der Fig. 8a, 8b gezeigt. Wie sich aus der schematischen Darstellung ergibt, kann sowohl das L-förmige Profil 111 als auch das L-förmige Profil 131 mit der Grundplatte 221 lösbar befestigt werden, indem hier nicht dargestellte gewindefurchende Schrauben die jeweiligen Befestigungsbohrungen 224 durchgreifen und in die Bohrungen 116 oder 136 eingreifen. Es versteht sich, dass entsprechendes auch für die andere Grundplatte 231 und die anderen L-förmigen Profile 121, 141 gilt.

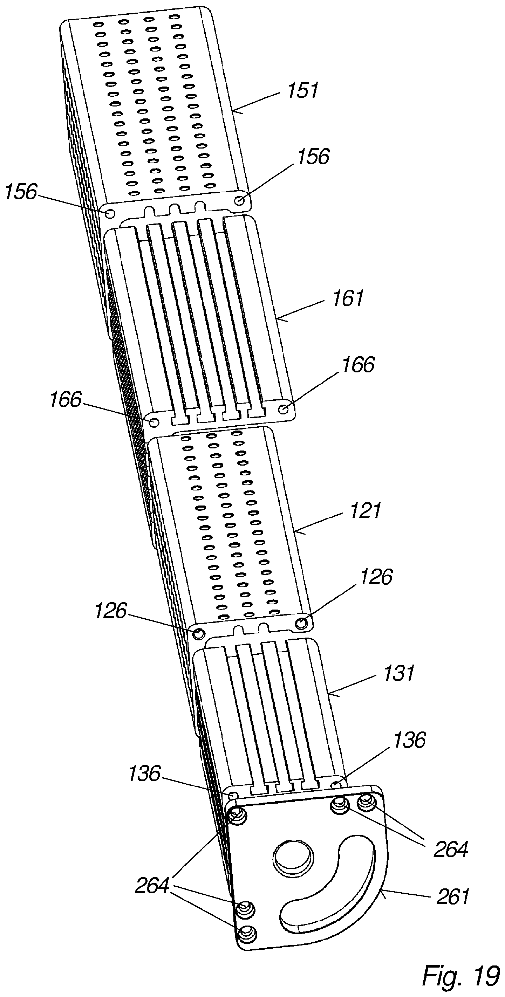

In der Fig. 19 ist die Grundplatte 261 der Fig. 12a, 12b gezeigt. Wie sich aus der schematischen Darstellung ergibt, können die L-förmigen Profile 121, 131, 151, 161 mit der Grundplatte 261 lösbar befestigt werden, indem hier nicht dargestellte gewindefurchende Schrauben die jeweiligen Befestigungsbohrungen 264 durchgreifen und in die Bohrungen 126, 136, 156, 166 eingreifen. Es versteht sich, dass entsprechendes auch für das andere L-förmige Profile 141 gilt.

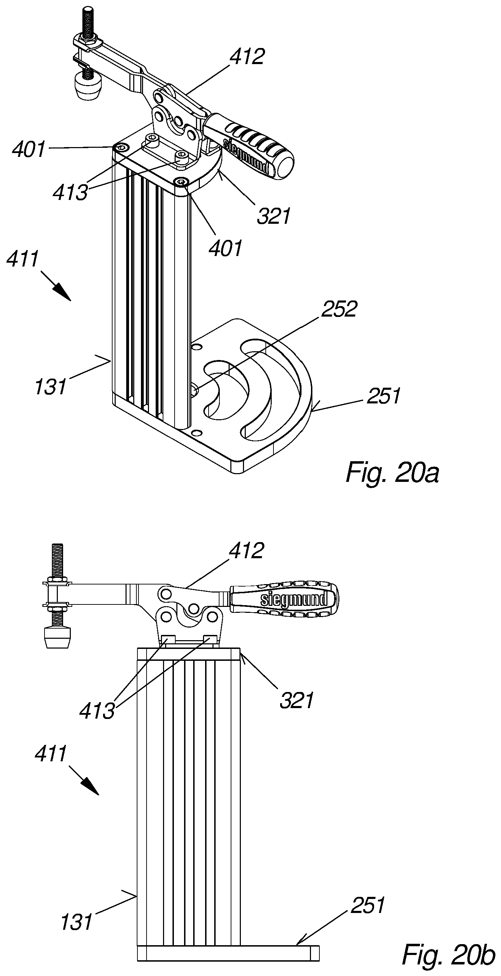

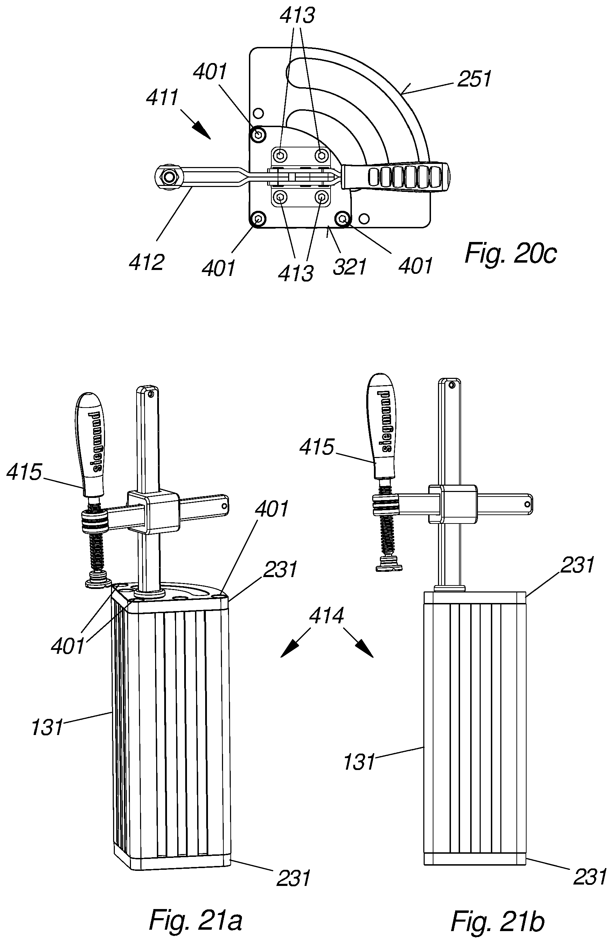

In den Fig. 20a, 20b, 20c ist ein Winkelelement 411 dargestellt, das aus einem L-förmigen Profil 131 besteht, an dessen einem Ende eine Grundplatte 251 und an dessen anderem Ende eine Spannplatte 321 lösbar befestigt sind. Dazu durchgreifen gewindefurchende Schrauben 401 die Befestigungsbohrungen 254 bzw. 324 und greifen in die Bohrungen 136 ein. Auf der Spannplatte 321 ist ein Schnellspanner 412 mit Gewindeschrauben 413 befestigt, die in die Gewindebohrungen 322 eingreifen. Bei dem Schnellspanner 412 handelt es sich um einen Vertikalspanner, wobei es sich versteht dass auch eine andere Art von Schnellspanner, beispielsweise ein Horizontalspanner oder ein Schubstangenspanner zum Einsatz kommen können. Das Winkelelement 411 kann mit nicht dargestellten Schnellspannbolzen eines entsprechenden Schweiß- und Spanntischsystems, die in die Systembohrung 252 und in eine der kreisbogenförmigen Ausnehmungen 255 eingeführt werden, auf einem Schweißtisch montiert werden.

In den Fig. 21a, 21b ist ein anderes Winkelelement 414 dargestellt, das aus einem L-förmigen Profil 131 besteht, an dessen beiden Enden jeweils eine Grundplatte 231 lösbar befestigt sind. Dazu durchgreifen gewindefurchende Schrauben 401 die Befestigungsbohrungen 254 und greifen in die Bohrungen 136 ein. Auf der oberen Grundplatte 231 ist eine Schraubzwinge 415 befestigt, indem ein rundes Fußstück der Schraubzwinge 415 in die Systembohrung 232 eingreift. Es versteht sich, dass auch anderes Zubehör eines entsprechenden Schweiß- und Spanntischsystems an der oberen Grundplatte 231 befestigt werden kann. Das Winkelelement 414 kann mit nicht dargestellten Schnellspannbolzen eines entsprechenden Schweiß- und Spanntischsystems, die in die Systembohrung 232 der unteren Grundplatte 231 und in die kreisbogenförmige Ausnehmung 235 eingeführt werden, auf einem Schweißtisch montiert werden.

Selbstverständlich sind unzählige weitere Kombinationsmöglichkeiten im Rahmen des erfindungsgemäßen Baukastensystems möglich. Dabei sind die Winkelelemente individuell anpassbar, indem die L-förmigen Profile auf die passende Höhe zugesägt werden können und in der den Belastungsanforderungen entsprechenden Stabilitätsausführung gewählt werden können. Die Verwendbarkeit der Grundplatten für mehrere L-förmige Profile bietet eine hohe Flexibilität. Dabei sind die Winkelelemente kompatibel zu den verschiedenen Ausführungen von Schweiß- und Spanntischsystemen. Sowohl nicht mehr benötigte Zuschnitte der L-förmigen Profile als auch die Grundplatten und Spannplatten können für neue Winkelelemente wiederverwendet werden.

### Bezugszeichenliste

- 111: L-förmiges Profil
- 112: Schenkel
- 113: Länge von 112
- 114: Dicke von 112
- 115: stirnseitige Enden
- 116: Bohrungen
- 117: Gewindebohrungen

- 121: L-förmiges Profil
- 122: Schenkel
- 123: Länge von 122
- 124: Dicke von 122
- 125: stirnseitige Enden
- 126: Bohrungen
- 127: Gewindebohrungen

- 131: L-förmiges Profil
- 132: Schenkel
- 133: Länge von 132
- 134: Dicke von 132
- 135: stirnseitige Enden
- 136: Bohrungen
- 138: T-Nuten

- 141: L-förmiges Profil
- 142: Schenkel
- 143: Länge von 132
- 144: Dicke von 132
- 145: stirnseitige Enden
- 146: Bohrungen
- 147: Gewindebohrungen
- 148: T-Nuten

- 151: L-förmiges Profil
- 152: Schenkel
- 153: Länge von 122
- 154: Dicke von 122
- 155: stirnseitige Enden
- 156: Bohrungen
- 157: Gewindebohrungen

- 161: L-förmiges Profil
- 162: Schenkel
- 163: Länge von 132
- 164: Dicke von 132
- 165: stirnseitige Enden
- 166: Bohrungen
- 168: T-Nuten

- 211: Grundplatte
- 212: Systembohrung
- 213: Abmessungen
- 214: Befestigungsbohrungen
- 215: kreisbogenförmige Ausnehmung

- 221: Grundplatte
- 222: Systembohrung
- 223: Abmessungen
- 224: Befestigungsbohrungen
- 225: kreisbogenförmige Ausnehmung

- 231: Grundplatte
- 232: Systembohrung
- 233: Abmessungen
- 234: Befestigungsbohrungen
- 235: kreisbogenförmige Ausnehmung

- 241: Grundplatte
- 242: Systembohrung
- 243: Abmessungen
- 244: Befestigungsbohrungen
- 245: kreisbogenförmige Ausnehmung

- 251: Grundplatte
- 252: Systembohrung
- 253: Abmessungen
- 254: Befestigungsbohrungen
- 255: kreisbogenförmige Ausnehmung

- 261: Grundplatte
- 262: Systembohrung
- 263: Abmessungen
- 264: Befestigungsbohrungen
- 265: kreisbogenförmige Ausnehmung

- 271: Grundplatte
- 272: Systembohrung
- 273: Abmessungen
- 274: Befestigungsbohrungen
- 275: kreisbogenförmige Ausnehmung

- 311: Spannplatte
- 312: Gewindebohrungen
- 313: Abmessungen
- 314: Befestigungsbohrungen

- 321: Spannplatte
- 322: Gewindebohrungen
- 323: Abmessungen
- 324: Befestigungsbohrungen

- 331: Spannplatte
- 332: Gewindebohrungen
- 333: Abmessungen
- 334: Befestigungsbohrungen

- 401: gewindefurchende Schrauben
- 411: Winkelelement
- 412: Schnellspanner
- 413: Gewindeschrauben
- 414: Winkelelement
- 415: Schraubzwinge

## Patentansprüche

1. Winkelelement (411, 414) für ein Schweiß- und Spanntischsystem, das aus einem L-förmigen Profil (111, 121, 131, 141, 151, 161) besteht, **dadurch gekennzeichnet, dass** die Außenseiten der Schenkel (112, 122, 132, 142, 152, 162) des L-förmigen Profils (111, 121, 131, 141, 151, 161) mit T-Nuten (138, 148, 168) und/oder mit Gewindebohrungen (117, 127, 147, 157) versehen sind und dass an einem Ende des L-förmigen Profils (111, 121, 131, 141, 151, 161) eine Grundplatte (211, 221, 231, 241, 251, 261, 271) und an dem anderen Ende des L-förmigen Profils (111, 121, 131, 141, 151, 161) entweder eine Grundplatte (211, 221, 231, 241, 251, 261, 271) oder eine Spannplatte (311, 321, 331) lösbar befestigt sind, wobei die Grundplatte (211, 221, 231, 241, 251, 261, 271) mit wenigstens einer Systembohrung (212, 222, 232, 242, 252, 262, 272) des Schweiß- und Spanntischsystems versehen ist und wenigstens eine kreisbogenförmige Ausnehmung (215, 225, 235, 245, 255, 265, 275) aufweist, und wobei die Spannplatte (311, 321, 331) mit mehreren Gewindebohrungen (312, 322, 332) versehen ist, um verschiedene Bohrbilder von Schnellspannern (412) zu erfassen.

2. Winkelelement (411, 414) nach Anspruch 1, **dadurch gekennzeichnet, dass** die Grundplatte (211, 221, 231, 241, 251, 261, 271) und/oder die Spannplatte (311, 3211, 331) Befestigungsbohrungen (214, 224, 234, 244, 254, 264, 274, 314, 324, 334), die sich mit entsprechenden Bohrungen (116, 126, 136, 146, 156, 166) in den stirnseitigen Enden (115, 125, 135, 145, 155, 165) des L-förmigen Profils (111, 121, 131, 141, 151, 161) decken, aufweisen und mittels gewindefurchenden Schrauben (401) an dem L-förmigen Profil (111, 121, 131, 141, 151, 161) befestigt sind.

3. Baukastensystem zur Herstellung verschiedener Varianten eines Winkelelements (411, 414) nach einem der vorhergehenden Ansprüche, wobei
- eine Mehrzahl verschiedener L-förmiger Profile (111, 121, 131, 141, 151, 161) in unterschiedlichen Stabilitätsausführungen vorgesehen sind,
**dadurch gekennzeichnet, dass**
die Außenseiten der Schenkel (112, 122, 132, 142, 152, 162) der verschiedenen L-förmigen Profile (111, 121, 131, 141, 151, 161) mit T-Nuten (138, 148, 168) und/oder mit Gewindebohrungen (117, 127, 147, 157) versehen sind
und dass bei dem Baukastensystem weiter
- eine Mehrzahl verschiedener Grundplatten (211, 221, 231, 241, 251, 261, 271) mit unterschiedlichen Systembohrungen (212, 222, 232, 242, 252, 262, 272) für unterschiedliche Schweiß- und Spanntischsysteme und/oder mit unterschiedlichen Abmessungen (213, 223, 233, 243, 253, 263, 273) entsprechend den Stabilitätsausführungen der L-förmigen Profile (111, 121, 131, 141, 151, 161) und mit wenigstens einer kreisbogenförmige Ausnehmung (215, 225, 235, 245, 255, 265, 275) für unterschiedliche Schweiß- und Spanntischsysteme , sowie
- eine Mehrzahl verschiedener Spannplatten (311, 321, 331) mit unterschiedlichen Abmessungen (313, 323, 333) entsprechend den Stabilitätsausführungen der L-förmigen Profile (111, 121, 131, 141, 151, 161) vorgesehen sind.

4. Baukastensystem nach Anspruch 3, **dadurch gekennzeichnet, dass** die verschiedenen L-förmigen Profile (111, 121, 131, 141, 151, 161) in standardisierter Länge und individuell kürzbar vorgesehen sind.

5. Baukastensystem nach einem der Ansprüche 3 bis 4, **dadurch gekennzeichnet, dass** die verschiedenen Grundplatten (211, 221, 231, 241, 251, 261, 271) und/oder die verschiedenen Spannplatten (311, 321, 331) Befestigungsbohrungen (214, 224, 234, 244, 254, 264, 274, 314, 324, 334), die sich mit entsprechenden Bohrungen (116, 126, 136, 146, 156, 166) in den stirnseitigen Enden (115, 125, 135, 145, 155, 165) eines oder mehrerer der verschiedenen L-förmigen Profile (111, 121, 131, 141, 151, 161) decken, aufweisen und mittels gewindefurchender Schrauben (401) an den L-förmigen Profilen (111, 121, 131, 141, 151, 161) befestigbar sind.

## Claims

1. Bracket element (411, 414) for a welding and clamping table system, comprising an L-shaped profile (111, 121, 131, 141, 151, 161), **characterized in that** the outer sides of the legs (112, 122, 132, 142, 152, 162) of the L-shaped profile (111, 121, 131, 141, 151, 161) are provided with T-slots (138, 148, 168) and/or with threaded boreholes (117, 127, 147, 157) and that at one end of the L-shaped profile (111, 121, 131, 141, 151, 161) a base plate (211, 221, 231, 241, 251, 261, 271) and at the other end of the L-shaped profile (111, 121, 131, 141, 151, 161) either a base plate (211, 221, 231, 241, 251, 261, 271) or a clamping plate (311, 321, 331) are releasably fastened, wherein the base plate (211, 221, 231, 241, 251, 261, 271) is provided with at least one system borehole (212, 222, 232, 242, 252, 262, 272) of the welding and clamping table system and has at least one circular arc-shaped recess (215, 225, 235, 245, 255, 265, 275), and wherein the clamping plate (311, 321, 331) is provided with several threaded boreholes (312, 322, 332) to accommodate various hole patterns of quick-change clamps (412).

2. Bracket element (411, 414) according to claim 1, **characterized in that** the base plate (211, 221, 231, 241, 251, 261, 271) and/or the clamping plate (311, 3211, 331) have mounting boreholes (214, 224 , 234, 244, 254, 264, 274, 314, 324, 334) which coincide with corresponding boreholes (116, 126, 136, 146, 156, 166) in the face ends (115, 125, 135, 145, 155, 165) of the L-shaped profile (111, 121, 131, 141, 151, 161), and are fastened via self-tapping screws (401) on the L-shaped profile (111, 121, 131, 141, 151, 161).

3. Modular system for producing different variants of a bracket element (411, 414) according to one of the preceding claims, wherein
- a plurality of various L-shaped profiles (111, 121, 131, 141, 151, 161) in different stability characteristics are provided,
**characterized in that**
the outer sides of the legs (112, 122, 132, 142, 152, 162) of the various L-shaped profiles (111, 121, 131, 141, 151, 161) are provided with T-slots (138, 148, 168) and/or threaded boreholes (117, 127, 147, 157)
and that in the modular system further
- a plurality of various base plates (211, 221, 231, 241, 251, 261, 271) with different system boreholes (212, 222, 232, 242, 252, 262, 272) for different welding and clamping table systems and/or with different dimensions (213, 223, 233, 243, 253, 263, 273) corresponding to the stability characteristics of the L-shaped profiles (111, 121, 131, 141, 151, 161) and with at least one circular arc-shaped recess (215, 225, 235, 245, 255, 265, 275) for different welding and clamping table systems, as well as
- a plurality of various clamping plates (311, 321, 331) with different dimensions (313, 323, 333) corresponding to the stability characteristics of the L-shaped profiles (111, 121, 131, 141, 151, 161)
are provided.

4. Modular system according to claim 3, **characterized in that** the various L-shaped profiles (111, 121, 131, 141, 151, 161) are provided in a standardized length and can be shortened individually.

5. Modular system according to one of the claims 3 to 4, **characterized in that** the various base plates (211, 221, 231, 241, 251, 261, 271) and/or the various clamping plates (311, 321, 331) have mounting boreholes (214, 224, 234, 244, 254, 264, 274, 314, 324, 334) which coincide with corresponding boreholes (116, 126, 136, 146, 156, 166) in the face ends (115, 125, 135, 145, 155, 165) of one or more of the various L-shaped profiles (111, 121, 131, 141, 151, 161), and can be fastened via self-tapping screws (401) to the L-shaped profiles (111, 121, 131, 141, 151, 161).

## Revendications

1. - Élément angulaire (411, 414) pour un système de table de soudage et de serrage, qui comprend un profilé en L (111, 121, 131, 141, 151, 161), **caractérisé par le fait que** les côtés externes des branches (112, 122, 132, 142, 152, 162) du profilé en L (111, 121, 131, 141, 151, 161) comportent des rainures en T (138, 148, 168) et/ou des trous filetés (117, 127, 147, 157), et qu'à une extrémité du profilé en L (111, 121, 131, 141, 151, 161) est fixée de manière amovible une plaque de base (211, 221, 231, 241, 251, 261, 271) et à l'autre extrémité du profilé en L (111, 121, 131, 141, 151, 161) est fixée de manière amovible soit une plaque de base (211, 221, 231, 241, 251, 261, 271) soit une plaque de serrage (311, 321, 331), la plaque de base (211, 221, 231, 241, 251, 261, 271) comportant au moins un trou de système (212, 222, 232, 242, 252, 262, 272) du système de table de soudage et de serrage, et présente au moins un évidement en forme d'arc de cercle (215, 225, 235, 245, 255, 265, 275), et la plaque de serrage (311, 321, 331) comportant plusieurs trous filetés (312, 322, 332) afin de recevoir différents schémas de perçage de dispositifs de serrage rapide (412).

2. - Élément angulaire (411, 414) selon la revendication 1, **caractérisé par le fait que** la plaque de base (211, 221, 231, 241, 251, 261, 271) et/ou la plaque de serrage (311, 3211, 331) présentent des trous de fixation (214, 224, 234, 244, 254, 264, 274, 314, 324, 334) qui coïncident avec des trous correspondants (116, 126, 136, 146, 156, 166) dans les extrémités frontales (115, 125, 135, 145, 155, 165) du profilé en L (111, 121, 131, 141, 151, 161) et sont fixées au profilé en L (111, 121, 131, 141, 151, 161) à l'aide de vis autotaraudeuses (401).

3. - Système modulaire pour la fabrication de différentes variantes d'un élément angulaire (411, 414) selon l'une des revendications précédentes, dans lequel
- plusieurs différents profilés en L (111, 121, 131, 141, 151, 161) dans différentes caractéristiques de stabilité sont prévus,
**caractérisé par le fait que**
les côtés externes des branches (112, 122, 132, 142, 152, 162) des différents profils en L (111, 121, 131, 141, 151, 161) comportent des rainures en T (138, 148, 168) et/ou des trous filetés (117, 127, 147, 157),
et que, dans le système modulaire, sont en outre prévues
- plusieurs différentes plaques de base (211, 221, 231, 241, 251, 261, 271) avec différents trous de système (212, 222, 232, 242, 252, 262, 272) pour différents systèmes de table de soudage et de serrage et/ou avec différentes dimensions (213, 223, 233, 243, 253, 263, 273) correspondant aux caractéristiques de stabilité des profilés en L (111, 121, 131, 141, 151, 161) et avec au moins un évidement en forme d'arc de cercle (215, 225, 235, 245, 255, 265, 275) pour différents systèmes de table de soudage et de serrage, ainsi que
- plusieurs différentes plaques de serrage (311, 321, 331) avec différentes dimensions (313, 323, 333) correspondant aux caractéristiques de stabilité des profilés en L (111, 121, 131, 141, 151, 161).

4. - Système modulaire selon la revendication 3, **caractérisé par le fait que** les différents profilés en L (111, 121, 131, 141, 151, 161) sont prévus dans des longueurs standardisées et pouvant être raccourcis individuellement.

5. - Système modulaire selon l'une des revendications 3 et 4, **caractérisé par le fait que** les différentes plaques de base (211, 221, 231, 241, 251, 261, 271) et/ou les différentes plaques de serrage (311, 321, 331) présentent des trous de fixation (214, 224, 234, 244, 254, 264, 274, 314, 324, 334) qui coïncident avec des trous correspondants (116, 126, 136, 146, 156, 166) dans les extrémités frontales (115, 125, 135, 145, 155, 165) d'un ou de plusieurs des différents profilés en L (111, 121, 131, 141, 151, 161) et sont aptes à être fixées aux profilés en L (111, 121, 131, 141, 151, 161) à l'aide de vis autotaraudeuses (401).
